# DEMANDE DE BREVET EUROPEEN

(11) **EP 0 726 185 A1**
(43) Date de publication de la demande: **14.08.1996**
(21) Numéro de dépôt: 96400240.6
(22) Date de dépôt: 05.02.1996
(51) Int. Cl.: B60R 21/20, B62D 1/04

(54) **Armature de volant de direction notamment de véhicule automobile**

(30) Priorité: 08.02.1995 FR 9501456
(71) Demandeur: ECIA - EQUIPEMENTS ET COMPOSANTS POUR L'INDUSTRIE AUTOMOBILE, F-25400 Audincourt (FR)
(72) Inventeur: Minet, Jean-Claude, F-25200 Montbeliard (FR); Xolin, Frédéric, F-25400 Audincourt (FR)
(74) Mandataire: Habasque, Etienne Joel Jean-François

(57) **Abrégé**

Cette armature de volant de direction, notamment de véhicule automobile, du type comportant une jante (2) de volant raccordée par au moins deux bras de liaison (3,4) à un moyeu (5) adapté pour coopérer avec un arbre de direction du véhicule, et comportant au moins deux tubes (6,7) en portions d'anneau sensiblement complémentaires, chaque tube (6,7) comportant une portion incurvée (6a,7a) formant une portion de la jante, à chaque extrémité de laquelle est prévue une portion repliée radialement (6b,6c, 7b, 7c) dont une extrémité est fixée sur le moyeu et formant avec la portion repliée correspondante de l'autre tube, un bras de liaison de la jante au moyeu, est caractérisée en ce que les portions repliées radialement des tubes formant bras comportent des moyens d'ancrage (8; 9) d'un module à sac gonflable.

## Description

La présente invention concerne une armature de volant de direction notamment de véhicule automobile.

On connait déjà dans l'état de la technique, différentes armatures de volant de direction de ce type qui comportent une jante de volant raccordée par au moins deux bras de liaison à un moyeu adapté pour coopérer avec un arbre de direction du véhicule.

On a assisté depuis quelques années, à un développement important de l'intégration de modules à sac gonflable dans les volants de direction, ce qui a amené à modifier ces armatures de volant pour permettre l'accrochage de ces modules.

Cet accrochage est réalisé par différents moyens prévus sur le moyeu de volant ou encore sur les bras de liaison.

Cependant, ceci a nécessité un surdimensionnement des armatures de volant pour permettre à celles-ci de supporter les contraintes occasionnées lors du déploiement du sac.

On conçoit que ceci présente un certain nombre d'inconvénients.

On connait également du document FR-A-2 664 223, au nom de la Demanderesse, une armature de volant de direction du type mentionné précédemment et comportant au moins deux tubes en portions d'anneau sensiblement complémentaires, chaque tube comportant une portion incurvée formant une portion de la jante, à chaque extrémité de laquelle est prévue une portion repliée radialement dont une extrémité est fixée sur le moyeu et formant avec la portion repliée correspondante de l'autre tube, un bras de liaison de la jante au moyeu.

Le but de l'invention est de proposer des perfectionnements à cette armature de volant pour permettre la fixation sur celle-ci d'un module à sac gonflable.

A cet effet, l'invention a pour objet une armature de volant de direction, notamment de véhicule automobile, du type comportant une jante de volant raccordée par au moins deux bras de liaison à un moyeu adapté pour coopérer avec un arbre de direction du véhicule et comportant au moins deux tubes en portions d'anneau sensiblement complémentaires, chaque tube comportant une portion incurvée formant une portion de la jante, à chaque extrémité de laquelle est prévue une portion repliée radialement dont une extrémité est fixée sur le moyeu et formant avec la portion repliée correspondante de l'autre tube, un bras de liaison de la jante au moyeu, caractérisée en ce que les portions repliées radialement des tubes formant bras comportent des moyens d'ancrage d'un module à sac gonflable.

Selon un mode de réalisation, les moyens d'ancrage comprennent des inserts engagés entre les deux portions repliées radialement des tubes, formant les bras de liaison.

Selon un autre mode de réalisation, les moyens d'ancrage comportent des prolongations du moyeu, surmoulées sur les portions repliées radialement des tubes, formant les bras de liaison.

L'invention sera mieux comprise à la lecture de la description qui va suivre, donnée uniquement à titre d'exemple et faite en se référant aux dessins annexés, sur lesquels :
- la Fig.1 représente une vue de face d'une armature de volant selon l'invention, les parties gauche et droite de cette figure illustrant des premier et second modes de réalisation de celle-ci;
- les Fig.2 et 3 illustrent des détails du mode de réalisation de l'armature de volant, représenté sur la partie gauche de la figure 1; et
- les Fig.4 et 5 illustrent des détails du mode de réalisation de l'armature de volant, représenté sur la partie droite de la figure 1.

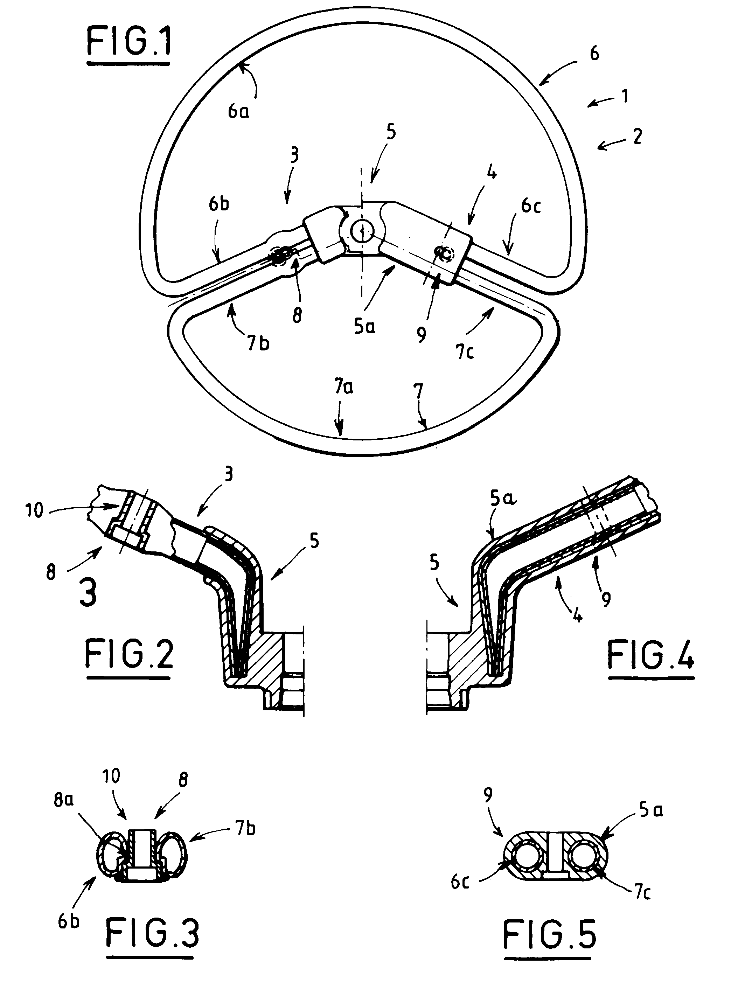

On reconnait sur la figure 1, une armature de volant de direction désignée par la référence générale 1 destinée notamment à un véhicule automobile.

Cette armature comporte de manière classique, une jante 2 de volant raccordée par au moins deux bras de liaison 3 et 4 à un moyeu 5 adapté pour coopérer avec un arbre de direction du véhicule.

Comme cela est décrit dans le document FR-A-2 664 223 au nom de la Demanderesse, cette armature comporte au moins deux tubes 6 et 7 en portions d'anneau sensiblement complémentaires, chaque tube comportant une portion incurvée formant une portion de la jante, à chaque extrémité de laquelle est prévue une portion repliée radialement dont une extrémité est fixée sur le moyeu et formant avec la portion repliée correspondante de l'autre tube, un bras de liaison de la jante au moyeu.

C'est ainsi par exemple, que le tube 6 comporte une portion incurvée 6a à chaque extrémité de laquelle sont prévues des portions repliées radialement 6b et 6c.

Le tube 7 comporte des portions correspondantes 7a, 7b et 7c respectivement.

Les portions de tube incurvées 6a et 7a forment donc la jante annulaire du volant, tandis que les portions repliées radialement 6b et 7b et 6c et 7c forment respectivement les bras de liaison 3 et 4 de celle-ci au moyeu 5.

Le raccordement entre les extrémités correspondantes des tubes 6 et 7 et le moyeu 5 peut par exemple être réalisé par surmoulage de celui-ci sur ces extrémités.

Selon l'invention, les portions repliées radialement des tubes, formant les bras 3 et 4, comportent des moyens d'ancrage d'un module à sac gonflable.

Ces moyens d'ancrage sont par exemple désignés par les références 8 et 9 respectivement sur la partie gauche et la partie droite de la figure 1.

Dans l'exemple de réalisation représenté sur la partie gauche de cette figure 1 et sur les figures 2 et 3, ces moyens d'ancrage comprennent par exemple des inserts 8 engagés entre les deux portions 6b, 7b repliées radialement des tubes 6 et 7 formant les bras de liaison.

Avantageusement et comme cela est représenté, ces inserts peuvent être engagés dans des évidements 10 ménagés entre les portions repliées radialement 6b et 7b et obtenues par exemple par déformation de celles-ci.

Comme cela est illustré sur la figure 3, ces inserts peuvent par exemple être soudés sur les bras et comporter par exemple un épaulement 8a adapté pour coopérer avec une surface de butée complémentaire des portions de tube 6b et 7b pour obtenir une immobilisation complète de cet insert entre les bras.

Chaque insert peut être muni de tout moyen d'accrochage approprié destiné à la fixation et à l'ancrage du module à sac gonflable.

Ces moyens peuvent par exemple être constitués par un trou de chaque insert adapté pour permettre le passage d'une vis de fixation ou autre.

Selon le mode de réalisation représenté sur la partie droite de la figure 1 et sur les figures 4 et 5, les moyens d'ancrage 9 sont formés par des portions du moyeu surmoulées autour des portions correspondantes des tubes formant bras.

Ces portions surmoulées sont par exemple désignées par la référence 5a sur ces figures.

Chaque portion surmoulée du moyeu comporte également par exemple un trou de passage d'une vis de fixation ou autre pour l'accrochage et l'ancrage du module à sac gonflable.

On notera à cet égard que le moyeu 5 peut par exemple être réalisé par moulage en métal léger autour des extrémités correspondantes des portions de tube formant bras de liaison, ces extrémités étant écrasées comme indiqué dans le document mentionné précédemment.

Dans l'exemple de réalisation décrit en regard de la figure 5, le trou de passage s'étend entre les portions de tube, mais il va de soi bien entendu que ce trou peut également être ménagé par exemple dans une partie en saillie latérale de chaque portion surmoulée d'un côté ou de l'autre de ces portions de tube.

On conçoit alors que la structure de cette armature de volant permet d'obtenir une fixation extrêmement fiable et rigide du module à sac gonflable sur celle-ci, dans la mesure où cette armature est elle-même extrêmement résistante.

## Revendications

1. Armature de volant de direction, notamment de véhicule automobile, du type comportant une jante (2) de volant raccordée par au moins deux bras de liaison (3,4) à un moyeu (5) adapté pour coopérer avec un arbre de direction du véhicule, et comportant au moins deux tubes (6,7) en portions d'anneau sensiblement complémentaires, chaque tube (6,7) comportant une portion incurvée (6a,7a) formant une portion de la jante, à chaque extrémité de laquelle est prévue une portion repliée radialement (6b,6c, 7b, 7c) dont une extrémité est fixée sur le moyeu et formant avec la portion repliée correspondante de l'autre tube, un bras de liaison de la jante au moyeu, caractérisée en ce que les portions repliées radialement des tubes formant bras comportent des moyens d'ancrage (8; 9) d'un module à sac gonflable.

2. Armature selon la revendication 1, caractérisée en ce que les moyens d'ancrage comprennent des inserts (8) engagés entre les portions repliées radialement (6b, 7b, 6c,7c) des tubes (6,7), formant les bras de liaison (3,4).

3. Armature selon la revendication 2, caractérisée en ce que les inserts (8) sont engagés dans des évidements (10) ménagés entre les portions repliées radialement des tubes, par déformation de celles-ci.

4. Armature selon la revendication 2 ou 3, caractérisée en ce que les inserts sont soudés sur les bras.

5. Armature selon l'une quelconque des revendications 2 à 4, caractérisée en ce que les inserts (8) comprennent des épaulements (8a) adaptés pour coopérer avec des surfaces de butée complémentaires des portions repliées radialement des tubes.

6. Armature selon la revendication 1, caractérisée en ce que les moyens d'ancrage (9) comprennent des prolongations (5a) du moyeu, surmoulées sur les portions repliées radialement des bras.
